# EUROPEAN PATENT APPLICATION

(11) **EP 4 537 936 A1**
(43) Date of publication of application: **16.04.2025**
(21) Application number: 23818952.6
(22) Date of filing: 26.05.2023
(51) Int. Cl.: B01L 3/00, G01N 35/00

(54) **CENTRIFUGAL MICROFLUIDIC ANALYSIS CHIP**

(30) Priority: 09.06.2022 CN 202210648017
(71) Applicant: Autobio Labtec Instruments Co., Ltd., Zhengzhou, Henan 450016 (CN)
(72) Inventor: YANG, Liuqing, Zhengzhou, Henan 450016 (CN); XU, Gang, Zhengzhou, Henan 450016 (CN); LI, Xin, Zhengzhou, Henan 450016 (CN); GUO, Guanhua, Zhengzhou, Henan 450016 (CN); WANG, Huanhuan, Zhengzhou, Henan 450016 (CN); WANG, Chao, Zhengzhou, Henan 450016 (CN); LIU, Cong, Zhengzhou, Henan 450016 (CN)
(74) Representative: V.O.
(86) International application number: PCT/CN2023/096470
(87) International publication number: WO 2023/236787

(57) **Abstract**

A centrifugal microfluidic analysis chip comprises a disc-structured substrate and a chip body which consists of cover plates bonded on the upper surface and the lower surface of the substrate; a rotation positioning hole which is provided in a circle center area of the chip body and connected to a rotating shaft; a sample inlet hole, an exhaust hole and an exhaust channel which are provided on the substrate, wherein the sample inlet hole can be cylindrical or conical so as to realize a sample injection operation, and the exhaust hole is used for maintaining constant air pressure in the channel in a sample addition process; and multiple liquid equipartition and detection units which are arranged at intervals in the circumferential direction around the circle center of the chip body according to a set radius and are sequentially communicated to form a liquid equipartition detection system. The present invention aims to solve the problems that existing chip bodies have complex structures, centrifugal operations require multiple rotational speeds, liquid dispensing is inaccurate, detection flux is low under a given chip body size, and supporting instruments have high costs.

## Description

The present application claims the priority to Chinese Patent Application No. 202210648017.2, titled "CENTRIFUGAL MICROFLUIDIC ANALYSIS CHIP", filed with the China National Intellectual Property Administration on June 9, 2022, the entire disclosure of which is incorporated herein by reference.

### FIELD

The present application relates to the technical field of micro total analysis systems, and in particular to a centrifugal microfluidic analysis chip.

### BACKGROUND

With development of micro total analysis systems (µ-TAS), centrifugal microfluidic chips are widely used, due to advantages of high throughput, high integration, high automation, easy portability and low processing cost, in the fields of biological, chemical, medical, environmental and food detection to provide carriers for reaction and detection of samples to be tested with regents.

At present, there are two main methods for uniformly distributing liquid by using a centrifugal microfluidic analysis chip: one is to directly carry out centrifugal uniform distribution, and the other is to perform preliminary uniform distribution followed by centrifugal uniform distribution.

In the method of directly carrying out centrifugal uniform distribution, the liquid to be tested is firstly added into a wave-shaped channel, and is then centrifuged, so that the liquid is uniformly distributed into a reaction cell for reaction through a capillary burst valve. For example, a multi-index detection microfluidic chip is disclosed in CN 103831140 B, including a wave-shaped main channel, a buffering cell and a reaction cell. During operation, liquid is added into the wave-shaped main channel, and is forced into the reaction cell under centrifugal drive, and the buffering cell is used to replenish the liquid in the reaction cell. This microfluidic chip may realize the uniform distribution of liquid in the reaction cell. However, the reaction cell and the buffering cell are connected as a whole structure, and the actual volume of the liquid participating in the reaction is the sum of volume of the liquid in the buffering cell and volume of the liquid in the reaction cell, so that there is still an error in the detection result of the structure. Furthermore, during centrifugal rotation, as the gas in the reaction cell is displaced into the wave-shaped main channel, it may push a part of liquid in peak of the wave-shaped main channel into an adjacent channel, which may cause inaccurate liquid preparation of a dispensing cell and cannot ensure uniformity of liquid distributed in the buffering cell and the reaction cell.

In the method of performing preliminary uniform distribution followed by centrifugal uniform distribution, the liquid to be tested is firstly added into a sample loading cell, and is then centrifuged at a specific rotating speed so that it is uniformly distributed into a sample buffering cell, and finally the liquid in the sample buffering cell is uniformly distributed into the reaction cell for reaction by increasing the rotating speed. For example, a centrifugal microfluidic chip is disclosed in CN 207586245 U, including a sample loading cell, a siphon channel, a sample buffering cell and a reaction cell. During operation, two-stage rotating speed is used to firstly distribute the liquid in the sample loading cell into the sample buffering cell through the siphon channel and then transport the liquid in the sample buffering cell to the reaction cell at increased rotating speed. The method may avoid, to a certain extent, the influence of gas-liquid exchange on liquid preparation during liquid distribution. However, it is necessary to prefabricate the special sample loading cell on the chip, resulting in reduction of number of the reaction cells in a limited space and reduction of detection throughput. Moreover, the multi-stage rotating speed is used for uniform distribution, resulting in high requirement for motor performance and increase of manufacture costs of supporting instrument.

### SUMMARY

An object of the present application is to provide a centrifugal microfluidic analysis chip, which can directly carry out the centrifugal distribution, can realize precise distribution of the sample to be detected, and is applicable to detection in different scenarios.

To achieve the above object, there are provided the following solutions.

The centrifugal microfluidic analysis chip of the application includes: a chip body, which is formed of a substrate in a disc structure and cover plates respectively bonding to an upper surface and a lower surface of the substrate; and a rotary positioning hole located in a center region of the chip body and connected to a rotating shaft. The substrate is provided with a sample loading hole, an exhaust hole and an exhaust channel. The sample loading hole is a cylindrical or conical hole or any other hole that realizes the loading operation of the sample. The exhaust hole is used to realize the constant gas pressure in each channel during sample loading process. A plurality of liquid distributing detection units are provided and spaced apart in a circumferential direction on the substrate around a center of the chip body at a set radius, and are communicated in turn to form a first liquid distributing detection system.

Each of the liquid distributing detection units includes a gas reservoir, two connecting channels, a dosing cell, a capillary channel and a reaction cell. The dosing cell and the reaction cell are spaced apart in a radial direction away from the center of the chip body, and are communicated by the capillary channel. The gas reservoir is arranged on a side wall, close to the center of the chip body, of the dosing cell. The two connecting channels are located at both sides of the gas reservoir and both communicate with the dosing cell.

One connecting channel of a first liquid distributing detection unit is communicated with the sample loading hole through a sample loading channel, and the other connecting channel of the first liquid distributing detection unit is communicated with one connecting channel of the adjacent liquid distributing detection unit. One connecting channel of a last liquid distributing detection unit is communicated with the exhaust hole through the exhaust channel, and the other connecting channel of the last liquid distributing detection unit is communicated with one connecting channel of the adjacent liquid distributing detection unit. The two connecting channels of each of the remaining liquid distributing detection unit are respectively communicated with the connecting channels of the two adjacent liquid distributing detection units.

The present application aims to solve the problems of the existing chip, for example, complex body structure, multi-stage rotating speed required during centrifugal operation, inaccurate liquid preparation, low detection throughput for a chip body having a given size, and high cost of supporting instruments.

Optionally, a volume of the dosing cell is 0.8 to 1.2 times of a volume of the reaction cell, so as to achieve uniform distribution of liquid. It is concluded from many experiments that liquid is more likely to fill the dosing cell when the ratio of the longitudinal length to the transverse length of the dosing cell is less than or equal to 1.2 : 1.

Optionally, the capillary channel is provided with a step valve or a transition hole at any position thereof; and the chip body is provided with a starting mark at a position corresponding to the first liquid distributing detection unit.

The step valve or transition hole is configured to improve the reliability of the microfluidic analysis chip, to reduce the length of the capillary channel, to reduce the diameter size of the substrate, and to prevent backflow of liquid. The starting mark is used to indicate the position of each hole of the microfluidic analysis chip, may be a notch in any shape, or a marking pattern in any shape.

Optionally, the angle between the axis of the capillary channel and the radial direction of the substrate is less than or equal to 70 degrees. As such, it can reduce the size of the microfluidic analysis chip as well as costs. The capillary channel may be arc-shaped or in any other shape.

Optionally, the first liquid distributing detection system is provided on the upper surface of the substrate, and a second liquid distributing detection system is provided on the lower surface of the substrate. The liquid distributing detection units in the first and second liquid distributing detection systems are staggered in the circumferential direction. The first and second liquid distributing detection systems are arranged in parallel. That is, one end of each of the first liquid distributing detection units of the first and second liquid distributing detection systems is communicated with the sample loading hole through the sample loading channel, and one connecting channel at one end of each of the last liquid distributing detection units of the first and second liquid distributing detection systems is communicated with the exhaust hole through the exhaust channel on the upper and lower surfaces. In this way, the detection throughput can be increased without changing the diameter of the substrate.

Optionally, the first liquid distributing detection system is provided on the upper surface of the substrate, and a third liquid distributing detection system is further provided on the upper surface of the substrate. The radius at which the first liquid distributing detection system is located is less than the radius at which the third liquid distributing detection system is located. The first and third liquid distributing detection systems are arranged in series. That is, one end of the first liquid distributing detection unit of the first liquid distributing detection system is communicated with the sample loading hole through the sample loading channel, and one connecting channel of the last liquid distributing detection unit of the first liquid distributing detection system is communicated with one connecting channel of the first liquid distributing detection unit of the third liquid distributing detection system through the communicating channel, and one connecting channel of the last liquid distributing detection unit of the third liquid distributing detection system is communicated with the exhaust hole through the exhaust channel. The communicating channel is also communicated with the waste channel. The waste channel is configured to collect excess liquid in the communicating channel, avoiding error in liquid preparation of the reaction cell of the first liquid distributing detection unit of the third liquid distributing detection system.

Optionally, the two connecting channels of each liquid distributing detection unit extend towards or away from the center of the circular substrate, and are each provided with a curved section.

In this application, the dosing cell is provided with the gas reservoir, so as to avoid gas displaced from the reaction cell from entering the connecting channel, which would otherwise cause the liquid in the connecting channel to migrate into the adjacent reaction cell and result in inaccurate liquid preparation. Furthermore, the cross-sectional size of the connecting channel is much smaller than that of the dosing cell, which increases the fluid resistance of the liquid flowing to the connecting channel during the rotation process and improves the accuracy of liquid preparation. The liquid distributing detection unit may be arbitrarily combined, and the structural design is diverse, which increases the scope of use. The present application does not use siphon channel and wave-shaped channel, simplifying the structure, lowering the manufacturing difficulty, and reducing the cost of supporting instrument.

### BRIEF DESCRIPTION OF THE DRAWINGS

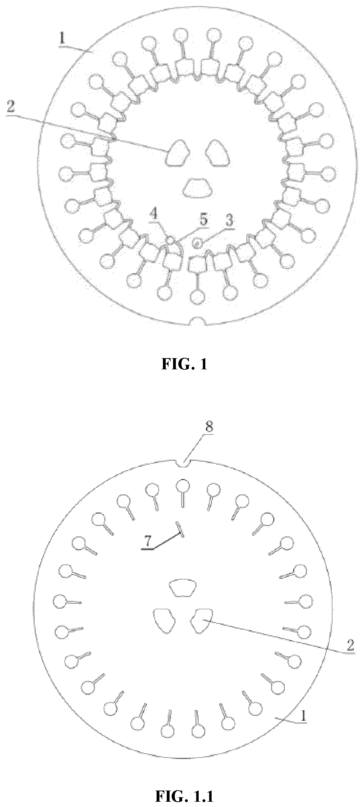

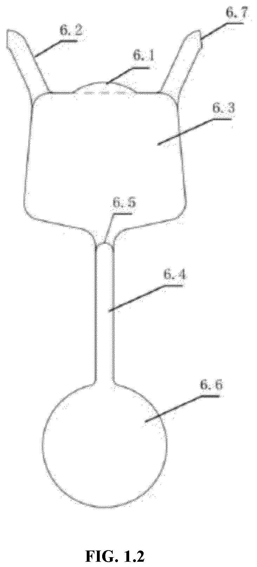

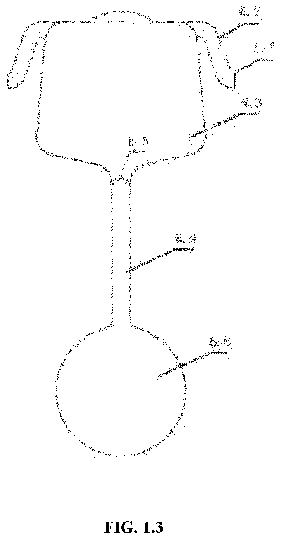

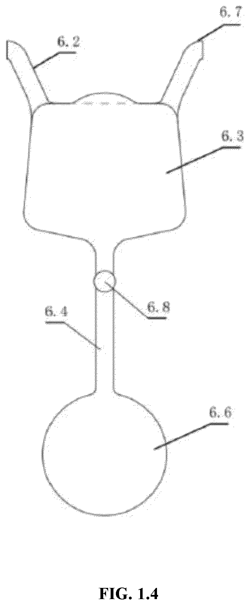

FIG. 1 is a schematic top structural view of a substrate according to an embodiment of the present application.
FIG. 1.1 is a schematic bottom structural view of FIG. 1.
FIG. 1.2 is a schematic structural view of a liquid distributing detection unit according to the present application.
FIG. 1.3 is another schematic structural view of a liquid distributing detection unit according to the present application.
FIG. 1.4 is a schematic structural view of a transition hole replacing a step valve in FIG. 1.2.
FIG. 1.2 is a schematic top structural view of a substrate according to the present application, in which an angle α between the axis of a capillary channel and a radial direction of the substrate is less than or equal to 70 degrees.
FIG. 2.2 is a schematic bottom structural view of FIG. 2.1.
FIG. 3.1 is a schematic top structural view of a substrate according to the present application, in which a first liquid distributing detection system and a second liquid distributing detection system are connected in parallel.
FIG. 3.2 is a schematic bottom structural view of FIG. 3.1.
FIG. 4.1 is a schematic top structural view of a substrate according to the present application, in which a first liquid distributing detection system and a third liquid distributing detection system are connected in series.
FIG. 4.2 is a schematic bottom structural view of FIG. 4.1.

### DETAILED DESCRIPTION OF THE EMBODIMENTS

Hereinafter, solutions in embodiments of the present application will be described clearly and completely with reference to the accompanying drawings in the embodiments of the present application. Obviously, the described embodiments are only a part, not all, of the embodiments of the present application. All other embodiments obtained by those skilled in the art based on the embodiments described herein without any creative effort fall within the scope of protection of the present application.

It shall be noted that all directional indications (e.g., upper, lower, left, right, front, rear, etc.) in the embodiments of this disclosure are only used to explain the relative position relationship between and motion of parts in a specific posture (as shown in the drawings). If the specific posture changes, the directional indication shall change accordingly.

The term "connected", "fixed" or the like herein shall be understood in a broad sense, unless otherwise expressly specified or defined. For example, "fixed" may mean fixed connection, or detachable connection, or one-piece element; may mean mechanical connection, or electric connection; may mean direct connection, or indirect connection through an intermediate medium, may mean internal communication between two elements, or may mean interaction between two elements, unless otherwise expressly specified. The meaning of the above term herein may be understood by those skilled in the art as the case may be.

Furthermore, the descriptive term such as "first", "second" or the like herein is used only for the purpose of illustrating, and not to be understood as indicating or implying its relative importance or implicitly specifying the number of the indicated technical features. Thus, the features defined as "first" or "second" may explicitly or implicitly include at least one of the features.

Moreover, the meaning of "and/or" appeared in the whole text is to include three parallel solutions. For example, "A and/or B" includes solution A, or solution B, or solution A and B. Furthermore, solutions of various embodiments may be combined with each other, but it must be based on the fact that those skilled in the art can realize. If combination of solutions is contradictory or cannot be realized, it shall be considered that such combination of solutions does not exist and is not within the scope of protection claimed by the application.

As shown in Figs. 1 and 1.1, the centrifugal microfluidic analysis chip according to the application incudes a chip body formed of a substrate 1 of disc structure and cover plates respectively bonding to the upper and lower surfaces of the substrate 1; and three rotary positioning holes 2 symmetrically arranged with respect to the center of the chip body, passing through the substrate 1 and connected to a rotating shaft. The substrate 1 is provided with a sample loading hole 3, an exhaust hole 4 and an exhaust channel 5. The sample loading hole 3 is a cylindrical or conical hole or any other hole that realizes the loading operation of the sample. The exhaust hole 4 is used to realize the constant gas pressure in each channel during sample loading process. A plurality of liquid distributing detection units are arranged and spaced apart in circumferential direction around the center of the chip body on the substrate 1 at the set radius, and are connected in turn to form a first liquid distributing detection system.

As shown in Figure 1.2, the liquid distributing detection unit includes a gas reservoir 6.1, a connecting channel 6.2, a dosing cell 6.3, a capillary channel 6.4, a step valve 6.5 and a reaction cell 6.6. The dosing cell 6.3 and the reaction cell 6.6 are spaced apart in the radial direction away from the center of the chip body, and are communicated by the capillary channel 6.4. The step valve 6.5 is positioned at the junction of the capillary channel 6.4 and the dosing cell 6.3, and is configured to improve the reliability of the microfluidic analysis chip, to reduce the length of the capillary channel 6.4, and to reduce the diameter size of the substrate 1. The gas reservoir 6.1 is arranged on the side wall, close to the center of the chip body, of the dosing cell 6.3. The two connecting channels 6.2 extend towards the center of the chip body, are located at both sides of the gas reservoir 6.1, and both communicate with the dosing cell 6.3. During centrifugation of the chip body, liquid in a connecting channel 6.2 flows into a dosing cell 6.3 connected to the connecting channel 6.2 under the action of centrifugal force, which avoids the liquid in the dosing cell 6.3 from migrating into the connecting channel to cause inaccurate liquid distribution.

Beneficially or exemplarily, as an example, as shown in Fig. 1.3, the two connecting channels 6.2 extend away from the center of the chip body, and are each provided with a curved section 6.7, so that a part of liquid may be residual in the connecting channels 6.2 during centrifugation of the chip body to isolate two adjacent liquid distributing detection units and thus to avoid volatile gas generated during reaction entering the two adjacent liquid distributing detection units to cause inaccurate detection result.

Beneficially or exemplarily, as an example, as shown in Fig. 1.4, the step valve is replaced with a transition hole 6.8. On the one hand, it facilitates the gas-liquid exchange to reduce the sample loading pressure in the reaction cell 6.6 and to lower the rotating speed; on the other hand, due to the height difference, a bubble is generated at the bottom of the transition hole 6.8 during distribution, and then is increasing in volume during reaction so as to partition the capillary channel 6.4 and ensure the reliability of sample detection result.

As shown in Figs. 1 and 1.1, in the first liquid distributing detection unit, one end is communicated with the sample loading hole 3 through a sample loading channel, and one connecting channel 6.2 at the other end is communicated with one connecting channel 6.2 of the adjacent liquid distributing detection unit. In the last liquid distributing detection unit, one connecting channel 6.2 is communicated with the exhaust hole 4 through the exhaust channel, and the other connecting channel 6.2 is communicated with one connecting channel 6.2 of the adjacent liquid distributing detection unit. In each of the remaining liquid distributing detection units, its connecting channels 6.2 are respectively communicated with the connecting channels 6.2 of the two adjacent liquid distributing detection units.

Beneficially or exemplarily, as an example, the exhaust channel 5 is an arc channel, a linear channel, or a channel with a narrowed structure. The narrowed structure prevents part of liquid in the exhaust channel from being discharged from the exhaust hole 4 to the outside during centrifugal process to cause environmental contamination.

The present application aims to solve the problems of the existing chip, for example, complex body structure, multi-stage rotating speed required during centrifugal operation, inaccurate liquid preparation, low detection throughput for a chip body having a given size, and high cost of supporting instruments.

Beneficially or exemplarily, as an example, the volume of the dosing cell 6.3 is 0.8 to 1.2 times of the volume of the reaction cell 6.6, so as to realize the quantitative and preliminary distribution of liquid. It is concluded from many experiments that liquid is more likely to fill the dosing cell when the ratio of the longitudinal length to the transverse length of the dosing cell 6.3 is less than or equal to 1.2 : 1.

Optionally, as an example, the chip body is provided with a starting mark 8 at the position corresponding to the first liquid distributing detection unit. The starting mark 8 may be a notch in any shape, or a marking pattern in any shape, as long as it can be used to indicate the position of each hole of the microfluidic analysis chip.

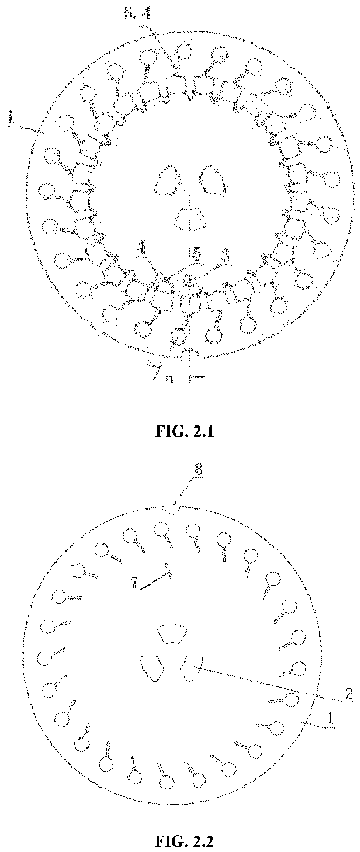

Beneficially or exemplarily, as an example, as shown in Figs. 2.1 and 2.2, the angle α between the axis of the capillary channel 6.4 and the radial direction of the substrate 1 is less than or equal to 70 degrees. As such, it can reduce the size of the microfluidic analysis chip as well as costs. The capillary channel may be arc-shaped or in any other shape.

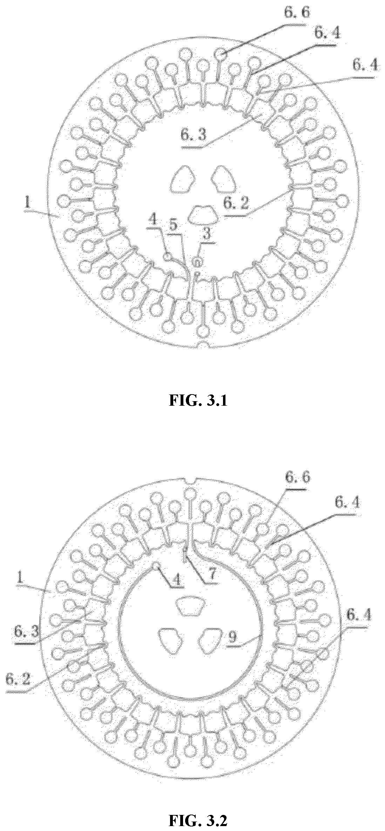

Beneficially or exemplarily, as an example, as shown in Figs. 3.1 and 3.2, a first liquid distributing detection system is provided on the upper surface of the substrate 1, and a second liquid distributing detection system is provided on the lower surface of the substrate 1. The liquid distributing detection units in the first and second liquid distributing detection systems are staggered arranged in the circumferential direction. The dosing cells 6.3 of the liquid distributing detection units in the first and second liquid distributing detection systems are each in a recessed structure provided on the surface of the substrate 1. The connecting channels 6.2 of the liquid distributing detection units in the first and second liquid distributing detection systems are each in a recessed-slot structure. The reaction cells 6.6 of the liquid distributing detection units in the first and second liquid distributing detection systems are each in a through-hole structure passing through the substrate 1. The capillary channels 6.4 of the liquid distributing detection units in the first and second liquid distributing detection systems are each in a through-slot structure. Since the reaction cells 6.6 and the capillary channels 6.4 all pass through the substrate 1, the sample loading hole 3 and the exhaust hole 4 also pass through the substrate 1, which is more applicable to optical detection occasions. The light transmittance requirement of the substrate 1 during detection may be reduced, which may thus reduce the cost of material and manufacturing of the substrate. Furthermore, the problem of generating bubbles at the junction of the reaction cell 6.6 and the capillary channel 6.4 can be avoided.

The first and second liquid distributing detection systems are arranged in parallel. That is, one end of each of the first liquid distributing detection units of the first and second liquid distributing detection systems is communicated with the sample loading hole 3 through the sample loading channel 7, and one connecting channel 6.2 of each of the last liquid distributing detection units of the first and second liquid distributing detection systems is communicated with the exhaust hole 4 through the exhaust channel 5 and an annular exhaust channel 9. In this way, the detection throughput can be increased without changing the diameter of the substrate 1.

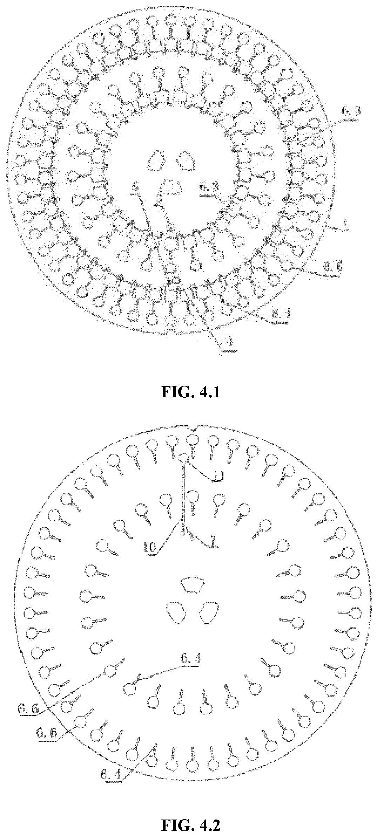

Beneficially or exemplarily, as an example, as shown in Figs. 4.1 and 4.2, the first liquid distributing detection system is provided on the upper surface of the substrate 1, and a third liquid distributing detection system is further provided on the upper surface of the substrate 1. The radius at which the first liquid distributing detection system is located is less than the radius at which the third liquid distributing detection system is located. The first and third liquid distributing detection systems are arranged in series through a communicating channel 10 on the lower surface of the substrate 1. That is, one end of the first liquid distributing detection unit of the first liquid distributing detection system is communicated with the sample loading hole 3 through the sample loading channel 7, and one connecting channel 6.2 of the last liquid distributing detection unit of the first liquid distributing detection system is communicated with one connecting channel 6.2 of the first liquid distributing detection unit of the third liquid distributing detection system through the communicating channel 10 on the lower surface of the substrate 1, and one connecting channel 6.2 of the last liquid distributing detection unit of the third liquid distributing detection system is communicated with the exhaust hole 4 through the exhaust channel 5. The communicating channel 10 is also communicated with the waste channel 11. The waste channel 11 is configured to collect excess liquid in the communicating channel 10, avoiding error in liquid distribution of the reaction cell 6.6 of the first liquid distributing detection unit of the third liquid distributing detection system.

In this embodiment, each reaction cell 6.6 is a through-hole structure passing through the substrate 1, and each capillary channel 6.4 is a through-slot structure passing through the substrate 1. The sample loading hole 3, the exhaust hole 4, the exhaust channel 5, the dosing cell 6.3, the connecting channel 6.2 are provided on the front face of the substrate 1. The sample loading channel 7, the communicating channel 10 and the waste cell 11 are provided on the back face of the substrate 1.

Referring to Figs. 1, 1.1 and 1.2, the method of use according to the application is briefly described below.

A pipette of 5 ml is used to take a certain amount of sample which is channeled to the dosing cell 6.3 from the sample loading hole 3 through the sample loading channel 7. As the liquid flows into the dosing cell 6.3, it flows along the longitudinal and transverse side walls of the dosing cell 6.3 under the action of the tension. When the liquid flows along the transverse side wall to the inlet of the next connecting channel 6.7, due to a sudden change of the wall structure at the junction of the transverse side surface of the dosing cell 6.3 and the connecting channel 6.2, the flow of the liquid is resisted, and then continues to flow along the longitudinal side wall of the dosing cell 6.3 for a certain distance and then contact the rear side wall of the dosing cell 6.3. Under the action of tension, the liquid will quickly flow to the rear side wall and fill the dosing cell 6.3.

The microfluidic analysis chip loaded with the contain sample is placed on a centrifugal detection platform and rotated counterclockwise for 3s at a speed of 800 r/min. Because the cross-sectional area of the dosing cell 6.3 is much larger than that of the connecting channel 6.2, the flow resistance of the liquid in the connecting channel 6.2 increases, ensuring the stability of the volume of the liquid in the adjacent dosing cells.

The liquid in the dosing cell 6.3 is driven by centrifugal force to successively break through the step valve 6.5 and the capillary channel 6.4 into the reaction cell 6.6 coated with the reaction drug so as to perform reaction. After the liquid enters the reaction cell 6.6, the gas in the reaction cell 6.6 is compressed instantaneously. When the gas pressure in the reaction cell 6.6 is greater than the liquid centrifugal pressure, the gas in the reaction cell 6.6 is pressed to move in a direction opposite to centrifugal direction, and then is displaced into the dosing cell 6.3, and is collected in the gas reservoir 6.1, thereby avoiding the gas from entering the connecting channel 6.2 to force the liquid in the connecting channel to flow to the adjacent dosing cell. Therefore, the dosing and uniform distributing operation of the liquid is realized.

After the reaction is finished, the reaction cells are successively detected by relevant detection equipment, and the detection results are output.

Explanation of some terms as used herein is given below.

The "step valve" is of a valve structure that has a step structure instead of a moving part in the micro-channel to suddenly change the size thereof through which fluid flows so as to interrupt flow in the capillary channel due to hysteresis of the contact angle at the geometric singularity.

The "capillary channel" is a pipe having a diameter much smaller than a length. When liquid flows through a capillary channel, a pressure drop may be generated along the direction of the capillary channel, thus hindering the flow of the liquid.

## Claims

1. A centrifugal microfluidic analysis chip, comprising: a chip body, which is formed of a substrate in a disc structure and cover plates respectively bonding to an upper surface and a lower surface of the substrate; and a rotary positioning hole located in a center region of the chip body and connected to a rotating shaft, wherein
the substrate is provided with a sample loading hole, an exhaust hole and an exhaust channel; a plurality of liquid distributing detection units are provided and spaced apart in a circumferential direction on the substrate around the center of the chip body at a set radius, and are communicated in turn to form a first liquid distributing detection system;
each of the liquid distributing detection units comprises a gas reservoir, two connecting channels, a dosing cell, a capillary channel and a reaction cell; the dosing cell and the reaction cell are spaced apart in a radial direction away from the center of the chip body, and are communicated by the capillary channel; the gas reservoir is arranged on a side wall, close to the center of the chip body, of the dosing cell; the two connecting channels are located at both sides of the gas reservoir and both communicate with the dosing cell; and
one end of a first liquid distributing detection unit is communicated with the sample loading hole through a sample loading channel, and one connecting channel at the other end of the first liquid distributing detection unit is communicated with one connecting channel of the adjacent liquid distributing detection unit; one connecting channel of a last liquid distributing detection unit is communicated with the exhaust hole through the exhaust channel, and the other connecting channel of the last liquid distributing detection unit is communicated with one connecting channel of the adjacent liquid distributing detection unit; the two connecting channels of each of the remaining liquid distributing detection unit are respectively communicated with the connecting channels of the two adjacent liquid distributing detection units.

2. The centrifugal microfluidic analysis chip according to claim **1,** wherein the ratio of a longitudinal length to a transverse length of the dosing cell is less than or equal to 1.2 : 1.

3. The centrifugal microfluidic analysis chip according to claim 1 or 2, wherein the capillary channel is provided with a step valve or a transition hole at any position thereof; and the chip body is provided with a starting mark at a position corresponding to the first liquid distributing detection unit.

4. The centrifugal microfluidic analysis chip according to claim 1 or 2, wherein a volume of the dosing cell is 0.8 to 1.2 times of a total volume of one reaction cell.

5. The centrifugal microfluidic analysis chip according to claim 1 or 2, wherein an angle between an axis of the capillary channel and the radial direction of the substrate is less than or equal to 70 degrees.

6. The centrifugal microfluidic analysis chip according to claim 1 or 2, wherein the first liquid distributing detection system is arranged on the upper surface of the substrate, a second liquid distributing detection system is arranged on the lower surface of substrate, the liquid distributing detection units of the first liquid distributing detection system and of the second liquid distributing detection system are staggered in the circumferential direction; the first liquid distributing detection system and the second liquid distributing detection system are arranged in parallel.

7. The centrifugal microfluidic analysis chip according to claim 1 or 2, wherein the first liquid distributing detection system is provided on the upper surface of the substrate, a third liquid distributing detection system is further provided on the upper surface of the substrate; a radius at which the first liquid distributing detection system is located is less than a radius at which the third liquid distributing detection system is located; the first liquid distributing detection system and the third liquid distributing detection system are arranged in series through a communicating channel on the lower surface of the substrate.

8. The centrifugal microfluidic analysis chip according to claim 1 or 2, wherein the two connecting channels of each liquid distributing detection unit extend towards or away from the center of the chip body, and are each provided with a curved section.
